(19) Europäisches Patentamt
European Patent Office
Office européen des brevets

(11) Veröffentlichungsnummer: **0 129 689**
**A2**

# (12) EUROPÄISCHE PATENTANMELDUNG

(21) Anmeldenummer: 84105432.3

(51) Int. Cl.⁴: **C 08 F 8/32**

(22) Anmeldetag: 14.05.84

(30) Priorität: 26.05.83 DE 3319014

(43) Veröffentlichungstag der Anmeldung: 02.01.85 Patentblatt 85/1

(84) Benannte Vertragsstaaten: CH DE FR GB LI SE

(71) Anmelder: BAYER AG
Konzernverwaltung RP Patentabteilung
D-5090 Leverkusen 1 Bayerwerk(DE)

(72) Erfinder: Sackmann, Günter, Dr.
Friedenberger Strasse 11
D-5090 Leverkusen 3(DE)

(72) Erfinder: Beck, Ulrich, Dr.
Weiherstrasse 17
D-5303 Bornheim(DE)

(72) Erfinder: Bäumgen, Heinz
Buchenweg 10
D-5090 Leverkusen 1(DE)

## (54) Copylmere und ihre Verwendung als Leimungsmittel.

(57) Die vorliegende Erfindung betrifft neue Copolymere auf Basis von Maleinsäureanhydrid/α,ß-ungesättigten Verbindungen, welche dadurch gekennzeichnet sind, daß sie aus

A) 10 bis 40 Molprozent des Strukturelements

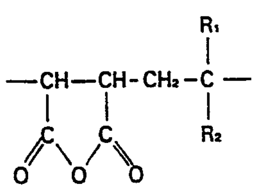

(I)

B) 40 bis 80 Molprozent des Strukturelements

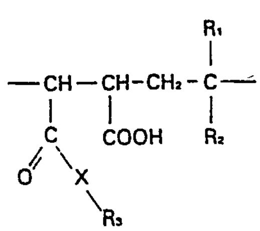

(II)

und

C) 10 bis 50 Molprozent des Strukturelements

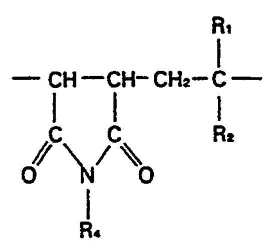

(III)

bestehen, wobei die Summe der Molprozente aus A), B) und C) 100 beträgt und wobei

$R_1$ = Wasserstoff oder Alkyl
$R_2$ = Wasserstoff, Alkyl oder gegebenenfalls substituiertes Aryl
$R_3$ = Kohlenwasserstoffrest mit 10 bis 22 C-Atomen
$R_4$ = Kohlenwasserstoffrest mit 10 bis 22 C-Atomen
X = Sauerstoffatom oder die Gruppe $NR_5$, wobei $R_5$ für einen Kohlenwasserstoffrest mit 1 bis 18 C-Atomen steht.

Die in Rede stehenden Copolymere sind ausgezeichnete Wirkstoffe für Papierleimungsmittel und sind sowohl für die Masseleimung als auch für Oberflächenleimung geeignet.

EP 0 129 689 A2

0129689

BAYER AKTIENGESELLSCHAFT 5090 Leverkusen, Bayerwerk

Konzernverwaltung RP
Patentabteilung Er/bc/c

## Copolymere und ihre Verwendung als Leimungsmittel

Die vorliegende Erfindung betrifft neue Copolymere auf Basis von Maleinsäureanhydrid, $\alpha$,ß-ungesättigten Verbindungen, welche dadurch gekennzeichnet sind, daß sie aus

A) 10 bis 40 Molprozent des Strukturelements

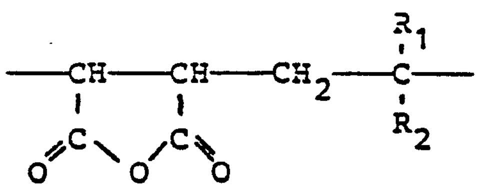

(I)

B) 40 bis 80 Molprozent des Strukturelements

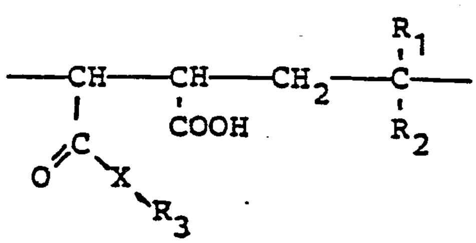

(II)

und

C) 10 bis 50 Molprozent des Strukturelements

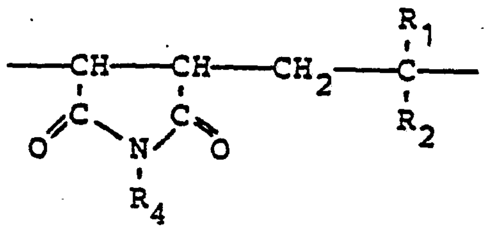

(III)

bestehen, wobei die Summe der Molprozente aus A), B) und C) 100 beträgt und wobei

$R_1$ = Wasserstoff oder Alkyl

$R_2$ = Wasserstoff, Alkyl oder gegebenenfalls substituiertes Aryl

$R_3$ = Kohlenwasserstoffrest mit 10 bis 22 C-Atomen

$R_4$ = Kohlenwasserstoffrest mit 10 bis 22 C-Atomen

X = Sauerstoffatom oder die Gruppe $NR_5$, wobei $R_5$ für einen Kohlenwasserstoffrest mit 1 bis 18 C-Atomen steht.

Vereinfachend können die erfindungsgemäßen Polymeren wie folgt charakterisiert werden:

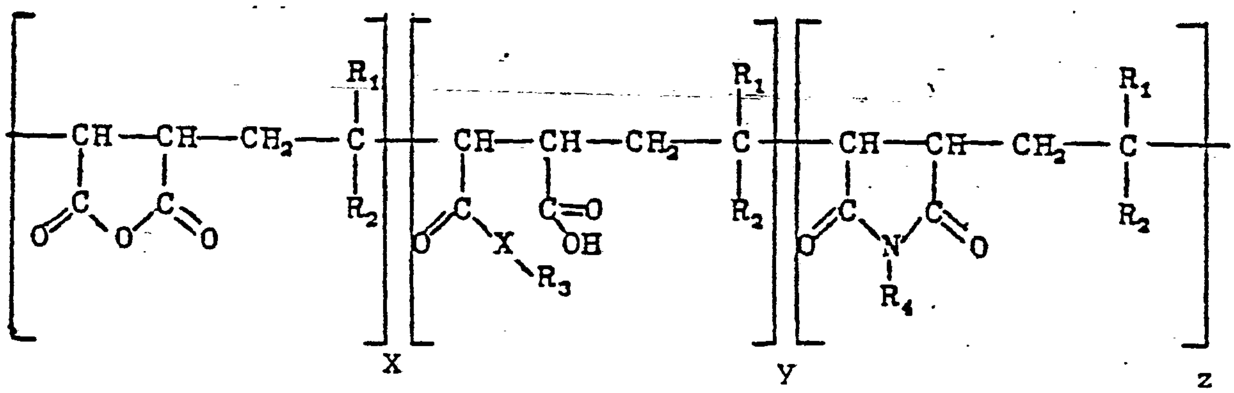

(IV)

wobei

$x$ = 10 bis 40 Molprozent

$y$ = 40 bis 80 Molprozent

$z$ = 10 bis 50 Molprozent

und wobei $R_1$, $R_2$, $R_3$ und $R_4$ die oben angegebene Bedeutung besitzen.

In der schematischen Formel (IV) werden dabei die Endgruppen nicht berücksichtigt.

Die erfindungsgemäßen Polymere können entweder alleine oder in Kombination mit kationischen Fixiermitteln (wie z.B. kationische Stärke, kationische Polyacrylamide, quaternierte Polyamine, Polyamidamine) als Leimungsmittel für Papier mit ausgezeichneten Leimungseigenschaften eingesetzt werden. Es handelt sich um Reaktivleimungsmittel.

Die Erfindung betrifft daher weiterhin Papierleimungsmittel, enthaltend die Polymere der Formel (IV) als Wirkstoff.

Zur Papierleimung ist grundsätzlich folgendes zu bemerken:

Zur Leimung von Papier werden in der Regel synthetische oder natürliche Leimungsmittel eingesetzt, die entweder zur Papiermasse zugesetzt werden oder aber mittels einer Leimpresse auf die fertige Papierbahn aufgetragen werden. Im ersten Falle spricht man von einer Masseleimung,

während es sich im zweiten Falle um Oberflächenleimung handelt. Die Leimung kann dabei in Abhängigkeit vom Typ des verwendeten Leimungsmittels nach zwei unterschiedlichen Wirkungsmechanismen eintreten: 1. Werden Leimungsmittel zusammen mit kationischen Fixiermitteln, wie z.B. Aluminiumsulfat oder kationisch geladenen Polymeren, eingesetzt, die keine zur Reaktion mit den OH- oder $CH_2OH$-Gruppen der Cellulose befähigte Gruppen tragen (z.B. Harzleim, Paraffine oder bestimmte synthetische Hochpolymere), dann wird die Leimung durch eine ionische Fixierung der Substanzen an der Cellulosefaser bewirkt. 2. Sogenannte Reaktivleimungsmittel erzielen ihre Leimungswirkung durch eine Ausbildung kovalenter Bindungen zwischen Leimungsmittel und Papierzellstoff. Als Reaktivleimungsmittel bezeichnet man in der Regel niedermolekulare hydrophobe Substanzen mit solchen funktionellen Gruppen, die zur chemischen Reaktion mit der Cellulose befähigt sind. Als Beispiele für Reaktivleimungsmittel seien genannt: Stearoyldiketen, Tetrapropenylbernsteinsäureanhydrid, Stearylisocyanat, Dehydroabietylisocyanat, Epoxide, Aziridinamide sowie Derivate von Cyanurchlorid und Trifluortriazin.

Die Reaktivleimungsmittel haben gegenüber den nichtreaktiven Produkten den Vorteil, daß sie aufgrund ihrer festen Bindung an die Fasern eine größere Effektivität besitzen. Dies wird auch durch neuere Forschungsergebnisse bestätigt (s.a. Kamutzky u. Krause in "Das Papier" 36 (1982) 7, S. 311 ff). Deshalb sind hierbei die zur Erzielung einer guten Leimungswirkung

benötigten Leimungsmittelmengen wesentlich niedriger als bei Verwendung nicht-reaktiver Leimungsmittel.

Als Reaktivleimungsmittel haben sich in der Praxis bisher vor allem solche Produkte durchgesetzt, die Stearoyldiketen als Wirksubstanz enthalten. Diese Produkte zeigen in Form von wäßrigen Suspensionen oder Lösungen in organischen Lösungsmitteln entweder alleine oder in Kombination mit kationischer Stärke oder kationisch geladenen Polymeren besonders auf im neutralen oder schwach alkalischen Milieu hergestellten Papieren gute bis sehr gute Leimungseigenschaften. Unter neutral bis schwach alkalisch gefahrenen Papieren versteht man gewöhnlich solche Papiere, die mit $CaCO_3$ als Füllstoff und ohne Zusatz von Aluminiumsulfat hergestellt werden. Ein Nachteil aller Leimungsmittel auf Stearoyldiketen-Basis ist, daß diese Produkte auf Papieren, die nicht Kreide sondern Kaolin als Füllstoff enthalten, nur eine sehr geringe oder aber überhaupt keine Leimungswirkung zeigen. Ein weiterer Nachteil von Leimungsmitteln auf Stearoyldiketen-Basis ist außerdem, daß es immer 1 bis 2 Tage bedarf, bis die volle Leimungswirkung ausgebildet ist (Nachreifezeit). Um mit diesen Produkten Papiere zu erhalten, die sofort nach ihrem Austritt aus der Papiermaschine voll geleimt sind, müßte die Papierbahn auf höhere Temperaturen erhitzt werden als sie es in der Trockenpartie der Papiermaschine auf den Trockenzylindern wird.

Es ist deshalb von großem Interesse, solche Leimungsmittel herzustellen, die auf Papieren mit unterschiedlichen Füllstoffen wie Kreide oder Kaolin sowie auf alkalischen, neutralen oder sauren Papieren eine ausgezeichnete Leimungswirkung ergeben. Außerdem ist es wünschenswert, daß die Ausbildung der Leimung ohne Verzögerung sofort nach Beendigung des Trocknungsvorganges für die Papierbahn erfolgt.

Aufgabe der Erfindung war deshalb die Herstellung eines Reaktivleimungsmittels für Papier, das auf Papieren, die unterschiedlichste Zusammensetzung aufweisen und die bei verschiedenen pH-Werten gefahren werden, eine ausgezeichnete Leimungswirkung besitzt, welche möglichst sofort nach Austreten der Papierbahn aus der Papiermaschine zur vollen Wirksamkeit kommt.

Diese Aufgabe konnte überraschenderweise dadurch gelöst werden, daß zur Leimung von Papier Polymere der Formel (IV) eingesetzt werden.

Die Substituenten $R_1$ bis $R_4$ der Formeln (I) bis (IV) besitzen folgende bevorzugte Bedeutungen:

$R_1$ = Wasserstoff oder Methyl
$R_2$ = Wasserstoff, Alkyl ($C_1$-$C_6$) oder gegebenenfalls durch Chlor, Methoxy oder OH substituiertes Phenyl
$R_3$ = Alkyl ($C_{10}$-$C_{18}$)
$R_4$ = Alkyl ($C_{10}$-$C_{22}$) oder Dehydroabietyl
X = Sauerstoffatom oder $NR_5'$,
wobei $R_5$ = Alkyl ($C_1$-$C_{18}$).

Alkyl ($C_1$-$C_6$) kann linear oder verzweigt sein.

Bei den erfindungsgemäßen Produkten handelt es sich um Umsetzungsprodukte von alternierenden Copolymerisaten aus Maleinsäureanhydrid und α,ß-ungesättigten Verbindungen der Formel (V)

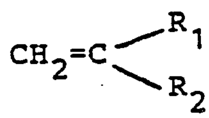 (V)

wobei

$R_1$ und $R_2$ die obengenannte Bedeutung haben,

mit Monoalkoholen oder sekundären Monoaminen der Formel (VI)

$$HX - R_3 \quad \text{(VI)}$$

wobei

X und $R_3$ die oben angegebene Bedeutung besitzen,

wobei ein Teil der Anhydridgruppen in Halbester oder Halbamidgruppen umgewandelt wird und mit langkettigen primären Monoaminen der Formel (VII)

$$R_4 - NH_2 \quad \text{(VII)}$$

wobei

$R_4$ die oben angegebene Bedeutung besitzt,

wobei ein anderer Teil der Anhydridgruppen in Imidgruppen umgewandelt wird.

Im erfindungsgemäßen Copolymer liegt das Verhältnis

der Gruppierungen A) : B) : C) wie bereits oben erwähnt bei (10-40 Molprozent) : (40-80 Molprozent) : (10-50 Molprozent).

Die Herstellung der Ausgangscopolymeren aus Maleinsäureanhydrid und $\alpha$,ß-ungesättigten Verbindungen (V) erfolgt dabei in bekannter Weise durch radikalisch initiierte Copolymerisation in Substanz, Lösung oder Suspension. Ein besonders einfaches Verfahren wird dabei in der Deutschen Offenlegungsschrift Nr. 2 501 123 beschrieben, wobei die Copolymerisation von Maleinsäureanhydrid mit $\alpha$-Olefinen in Suspension in Gegenwart spezieller Suspendierhilfsmittel erfolgt und überschüssiges $\alpha$-Olefin als Suspendiermedium eingesetzt wird.

Die Molekulargewichte der so hergestellten Copolymerisate liegen im Bereich von ca. 5000 bis ca. 400 000.

Die Reaktion der Ausgangscopolymeren aus Maleinsäureanhydrid und $\alpha$,ß-ungesättigten Verbindungen (V) mit den aliphatischen Monoalkoholen oder sekundären aliphatischen Monoaminen (VI) kann in Substanz oder in Lösung bei Temperaturen zwischen 50 und 150°C, bevorzugt bei 100 bis 120°C, erfolgen. Als Monoalkohole kommen dabei vor allem Decanol, Dodecanol, Tetradecanol, Hexadecanol, Octadecanol und Behenylalkohol und als sekundäre Amine Methyloctadecylamin in Frage. Diese Monoalkohole und sek. Monoamine werden in solchen Mengen eingesetzt, daß zwischen 40 und 80 Mol-% der cyclischen Anhydridgruppen, bevorzugt 40 bis 70 Mol-%, zu Halbester- bzw. Halbamidgruppen umgesetzt werden. Findet diese Umsetzung in Gegenwart eines Lösungsmittels wie Toluol oder Xylol statt, dann ergibt sich mit zunehmendem Umsetzungsgrad eine allmähliche Auflösung des zunächst unlöslichen Copolymeren in dem jeweils verwendeten Lösungsmittel. 10 - 50 Mol-% der ursprünglich vorhandenen Anhydridgruppen werden danach mit primären, stark hydrophoben Monoaminen unter Bildung von Imidgruppierungen umgesetzt.

Diese Umsetzung wird bei Temperaturen von 100 bis 170°C, bevorzugt bei 120 bis 150°C, unter Abspaltung von Reaktionswasser in mit Wasser nicht mischbaren Lösungsmitteln, wie z.B. Toluol oder Xylol, durchgeführt. Als hydrophobe Monoamine werden dabei Dodecylamin, Tetradecylamin, Hexadecylamin, Octadecylamin und Dehydroabietylamin eingesetzt.

Die nach der Reaktion mit den Monoalkoholen/sekundären Aminen und primären Aminen im Polymermolekül noch verbleibenden 10 - 40 Mol-% Anhydridgruppen stellen die Reaktivgruppen dar, über welche die Cellulose bei der Leimung an das Leimungsmittel gebunden wird.

Insbesondere ist es wesentlich für die Leimungswirkung der erfindungsgemäßen Produkte, daß diese Anhydrid-, Halbester-/Halbamid- und Imidgruppen in den oben angegebenen Molverhältnissen enthalten. Bevorzugt sind Produkte mit 20 bis 40 Mol-% Anhydrid-, 40 bis 70 Mol-% Halbester-/Halbamid- und 10 bis 30 Mol-% Imid-Gruppen. Die in den Copolymeren außerdem noch vorhandenen freien Carboxylgruppen können zusätzlich mit Aminen in ihre Salze überführt werden. Allerdings ist diese Salzbildung für die Ausbildung einer ausgezeichneten Leimungswirkung nicht notwendig.

In einer bevorzugten Ausführungsform der Erfindung kommen die folgenden Copolymerisate VIII und IX als Leimungsmittel bei der Papierherstellung zum Einsatz:

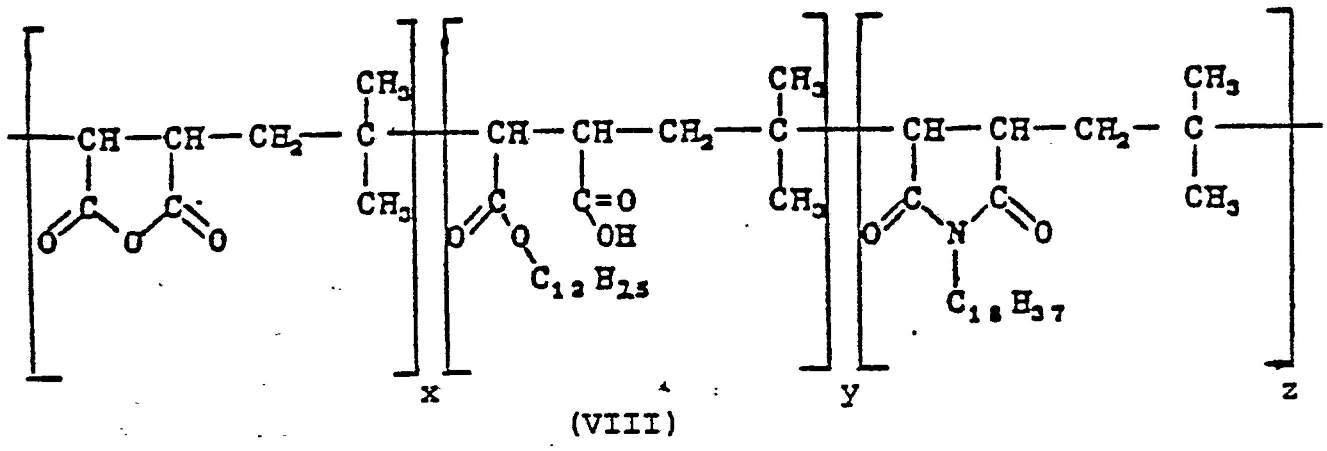

(VIII)

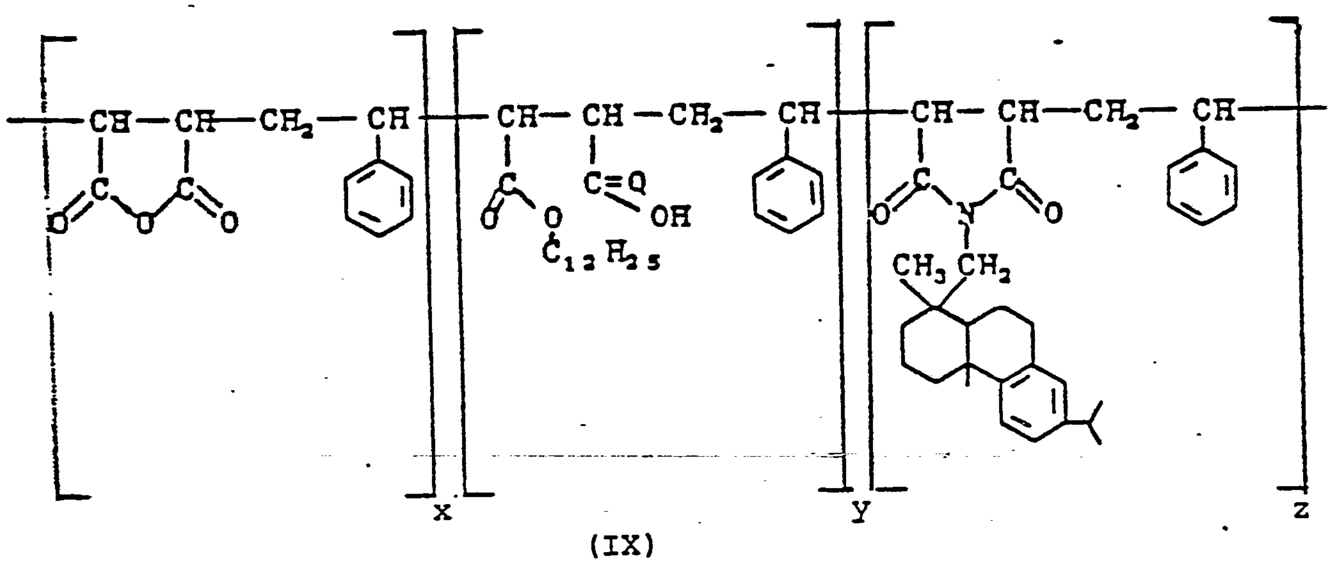

(IX)

wobei

$C_{12}H_{25}$ = n-Dodecyl

$C_{18}H_{37}$ = Stearyl

und wobei x, y und z die oben angegebene Bedeutung besitzen.

Bei den Papierleimungsverfahren, zu denen die erfindungsgemäßen Leimungsmittel eingesetzt werden, kann es sich sowohl um eine Oberflächenleimung als auch um eine Masseleimung handeln. Dazu können die beschriebenen, Anhydrid-, Halbester-/Halbamid- und Imid-Gruppen tragenden Copolymerisate in Form von Lösungen, z.B. in organischen Lösungsmitteln wie Toluol oder Xylol, oder in Form von wäßrigen Formulierungen, wie z.B. als Suspensionen oder Emulsionen, eingesetzt werden. Als Suspendierhilfsmittel sind z.B. Polyvinylalkohol oder wasserlösliche Cellulosederivate, insbesondere kationische Stärke, gut geeignet. Gegebenenfalls können zusätzlich noch nichtreaktive Emulgatoren zur Verbesserung der Emulsionsstabilität zugesetzt werden.

## Beispiele

### Beispiel 1

154 g eines alternierenden Copolymerisats aus Maleinsäureanhydrid und Isobutylen mit dem in DMF gemessenen Grenzviskositätswert $[\eta]$ von 1,2 $[\frac{dl}{g}]$, werden 24 Stunden lang mit 186 g Dodecylalkohol bei einer Temperatur von 120°C gerührt. Die entstandene Schmelze wird in einer solchen Menge an Xylol gelöst, daß eine Polymerlösung mit ca. 20 % Feststoff entsteht.

180,3 g dieser xylolischen Lösung werden unter Rühren mit 13,5 g Stearylamin versetzt und 24 Stunden auf 140 bis 150°C erhitzt. Das sich bei dieser Reaktion abspaltende Reaktionswasser wird azeotrop aus dem Reaktionsgemisch abdestilliert und die entstandene Lösung des Leimungsmittels durch Verdünnen mit Xylol auf einen Festgehalt von ca. 10 % eingestellt.

Zusammensetzung des Copolymeren:

$x \approx$ 28 Mol.-% } bestimmt durch IR-Spektroskopie
$y \approx$ 50 " }
$z \approx$ 22 " ) aus der $H_2O$-Abspaltung

Beispiel 2

202 g eines alternierenden Copolymerisats aus Maleinsäureanhydrid und Styrol mit der Grenzviskositätszahl $[\eta] = 1{,}48\ [\frac{dl}{g}]$, gemessen in DMF, werden 24 Stunden mit 186 g Dodecylalkohol bei einer Temperatur von 120°C gerührt. Das entstandene Reaktionsgemisch wird in Xylol gelöst und die Lösung auf einen Festgehalt von 20 Gew.-% eingestellt.

194 g dieser Lösung werden 24 Stunden bei 140 bis 150°C mit 7,1 g Dehydroabietylamin umgesetzt, wobei das entstehende Reaktionswasser azeotrop aus der Lösung abdestilliert wird. Die entstandene Leimungsmittellösung wird durch Verdünnen mit Xylol auf einen Festgehalt von ca. 10 % eingestellt.

Zusammensetzung des Copolymeren:

| | | |
|---|---|---|
| x | 30 Mol.-% | bestimmt durch IR-Spektroskopie |
| y | 60 " | |
| z | 10 " | aus der $H_2O$-Abspaltung |

Beispiel 3

Einsatz der gemäß den Beispielen 1 und 2 hergestellten Produkte (Leimungsmittel 1 und Leimungsmittel 2) als

Papierleimungsmittel.

Um die Leimungseigenschaften der erfindungsgemäßen Substanzen möglichst störungsfrei zu ermitteln, d.h. um alle durch die Formulierung bedingten Einflüsse auszuschalten, wird der unten beschriebene Test mit Papieren verschiedener Zusammensetzung durchgeführt.

| | |
|---|---|
| Papiersorte A: | 50 Teile Nadelholzsulfat |
| (neutral) | 50 Teile Birkensulfat |
| | 10 Teile Kreide |
| | |
| Papiersorte B: | 50 Teile Nadelholzsulfat |
| (neutral) | 50 Teile Birkensulfat |
| | 10 Teile Kaolin |
| | |
| Papiersorte C: | 50 Teile Nadelholzsulfat |
| (sauer) | 50 Teile Birkensulfat |
| | 12 Teile Kaolin |
| | 1,5 Teile Alaun |

Diese Papiere wurden auf einem Foulard-Gerät mit den zu prüfenden Leimungsmitteln, 0,1 %ig gelöst in Toluol, ausgerüstet und abgequetscht. Danach wurden sie den Nachbehandlungen I-IV unterzogen:

| | Art der Nachbehandlung | zu untersuchender Effekt |
|---|---|---|
| I | 5 min bei 150°C | Wirkung des ausreagierten Leimungsmittels |
| II | 1 min bei 90°C | Anspringen der Reaktion des reinen Wirkstoffs bei praxisüblichen Temperaturen <120°C |
| III | 5 min bei 90°C zwischen zwei nassen Filterpapieren | Einfluß der Feuchtigkeit |
| IV | Luftgetrocknet bei 20°C | ev. Leimung ohne chemische Reaktion |

Die geleimten und nach I-IV nachbehandelten Papiere werden in Streifen von 3 cm Breite und 9 cm Länge geschnitten und auf blaue Prüftinte gelegt. Nach 1 Minute Auflage werden die Probepapiere von der Tinte genommen, rückseitig auf Löschpapier abgequetscht und nach 5 Minuten beurteilt.

Zur qualitativen Beurteilung der Durchdringung der Tinte durch das Papier und damit des Leimungsgrades wird eine Bewertung mit den Zahlen 1 bis 5 durchgeführt, wobei die Zahlen im einzelnen bedeuten:

1 kein Tintendurchschlag
2 5-10 % Tintendurchschlag
3 10-20 % Tintendurchschlag
4 ca. 50 % Tintendurchschlag
4,5* ca. 90 % Tintendurchschlag
5 100 % Tintendurchschlag

* Außerdem können noch weitere Zwischenwerte herangezogen werden.

Die folgende Tabelle gibt die Bewertung der Leimungswirkung der erfindungsgemäßen Leimungsmittel auf den Papieren A, B und C gemäß o.g. Schema wieder. Als Vergleich mit dem Stand der Technik wurde das als Wirksubstanz in vielen handelsüblichen Leimungsmitteln eingesetzte Stearoyldiketen verwendet.

Versuchsergebnisse

1. Papiersorte A: (kreidehaltig, neutral)

| Leimungsmittel | Feststoff i. Toluol | Bewertung der Leimung bei Nachbehandlung I | II | III | IV | Durchschnitt d. Bewertung |
|---|---|---|---|---|---|---|
| erfindungsgemäßes Leimungsmittel 1 | 0,1 % | 1 | 1 | 1 | 1 | 1,0 |
| erfindungsgemäßes Leimungsmittel 2 | 0,1 % | 1 | 1 | 1 | 2 | 1,25 |
| Stearoyldiketen | 0,1 % | 1 | 4,5 | 2 | 5 | 3,1 |

2. Papiersorte B: (kaolinhaltig, neutral)

| Leimungsmittel | Feststoff i. Toluol | Bewertung der Leimung bei Nachbehandlung I | II | III | IV | Durchschnitt d. Bewertung |
|---|---|---|---|---|---|---|
| erfindungsgemäßes Leimungsmittel 1 | 0,2 % | 1 | 1 | 2 | 3 | 1,75 |
| erfindungsgemäßes Leimungsmittel 2 | 0,1 % | 1,5 | 1,5 | 1,5 | 2 | 1,63 |
| Stearoyldiketen | 0,2 % | 2 | 5 | 5 | 5 | 4,25 |

3. Papiersorte C: (kaolinhaltig, sauer)

| Leimungsmittel | Feststoff i. Toluol | Bewertung der Leimung bei Nachbehandlung I | II | III | IV | Durchschnitt d. Bewertung |
|---|---|---|---|---|---|---|
| erfindungsgemäßes Leimungsmittel 1 | 0,2 % | 1 | 1 | 1,5 | 2 | 1,38 |
| erfindungsgemäßes Leimungsmittel 2 | 0,1 % | 1 | 1 | 2 | 4 | 2,0 |
| Stearoyldiketen | 0,2 % | 4,5 | 5 | 5 | 5 | 4,88 |

Die aufgeführten Versuchsergebnisse zeigen deutlich, daß die erfindungsgemäßen Leimungsmittel dem dem Stand der Technik entsprechenden Steraoyldiketen auf allen drei untersuchten Papiersorten deutlich überlegen sind. Diese Überlegenheit kommt besonders auf den Papiersorten B und C (kaolinhaltig, neutral bzw. kaolinhaltig, sauer), wo Stearoyldiketen praktisch unwirksam ist, zum Ausdruck, obwohl Stearoyldiketen hierbei in doppelt so hoher Konzentration wie z.B. das erfindungsgemäße Leimungsmittel 2 eingesetzt wurde.

## Beispiel 4

Um zu zeigen, wie gut die erfindungsgemäßen Leimungsmittel auf den damit geleimten Papieren haften, wurden mit 0,1 %igen toluolischen Lösungen des erfindungsgemäßen Leimungsmittels 1 und Stearoyldiketen behandeltes Papier der Sorte A (kreidehaltig) nach der Trocknung bei 120°C mit $CHCl_3$ 5 Minuten ausgewaschen und anschließend

wurde wieder eine Tintenschwimmprobe durchgeführt. Die Beurteilung der Tintenschwimmproben gemäß der unter Beispiel 3 angegebenen Tabelle ergab dabei folgende Werte:

| Leimungsmittel | Feststoff i. Toluol | Bewertung der Leimung Auswaschen m. $CHCl_3$ | ohne Auswaschen |
|---|---|---|---|
| erfindungsgemäßes Leimungsmittel 1 | 0,1 % | 1 | 1 |
| Stearoyldiketen | 0,1 % | 3 | 1 |

Noch deutlicher sind die Unterschiede zwischen dem erfindungsgemäßen Leimungsmittel 1 und Stearoyldiketen zu sehen, wenn die mit den Leimungsmitteln geleimten Papiere bei unterschiedlichen Temperaturen getrocknet werden und anschließend ebenfalls mit $CHCl_3$ behandelt werden. Die Beurteilung der Ergebnisse der Tintenschwimmproben sind in der folgenden Tabelle zusammengefaßt.

| Trocknungstemperatur | Bewertung d. Leimung n.d. $CHCl_3$-Behandlung erfindungsgemäßes Leimungsmittel 1 | Stearoyldiketen |
|---|---|---|
| 120°C | 1 | 2,5 |
| 110°C | 1 | 3,5 |
| 100°C | 1 | 4 |
| 90°C | 1 | 4,5 |
| 80°C | 1 | 5 |
| 20°C | 1 | 5 |

Aus dieser Tabelle geht hervor, daß das erfindungsgemäße Leimungsmittel 1 bereits bei Raumtemperatur fest auf dem Papier haftet, während Stearoyldiketen schon bei Trocknungstemperaturen, die unterhalb von 100°C liegen zum großen Teil wieder ausgewaschen wird, wie aus den Bewertungen der Tintenschwimmproben hervorgeht.

Neben dem Vorteil einer Wirksamkeit auf kaolinhaltigen neutralen und sauren Papieren bieten die erfindungsgemäßen Leimungsmittel dadurch noch einen weiteren Vorteil gegenüber Stearoyldiketen, daß ein wesentlich geringerer Energieaufwand notwendig ist, um ihre Leimungseigenschaften voll zur Wirkung zu bringen.

Patentansprüche

1) Copolymere auf Basis von Maleinsäureanhydrid/α,β-ungesättigten Verbindungen, dadurch gekennzeichnet, daß sie aus

A) 10 bis 40 Molprozent des Strukturelements

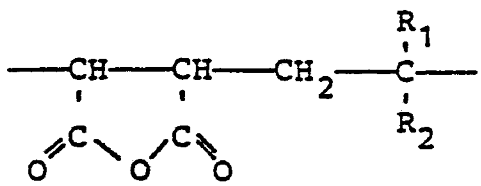

(I)

B) 40 bis 80 Molprozent des Strukturelements

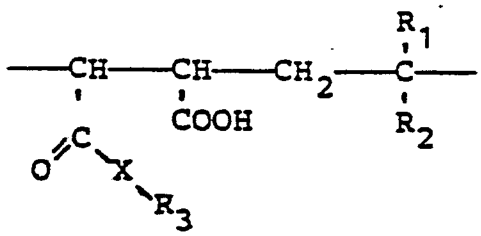

(II)

und

C) 10 bis 50 Molprozent des Strukturelements

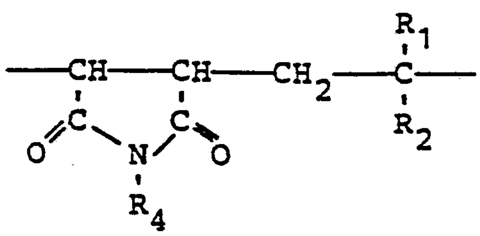

(III)

bestehen, wobei die Summe der Molprozente aus A), B) und C) 100 beträgt und wobei

$R_1$ = Wasserstoff oder Alkyl
$R_2$ = Wasserstoff, Alkyl oder gegebenenfalls substituiertes Aryl
$R_3$ = Kohlenwasserstoffrest mit 10 bis 22 C-Atomen
$R_4$ = Kohlenwasserstoffrest mit 10 bis 22 C-Atomen
X = Sauerstoffatom oder die Gruppe $NR_5$, wobei $R_5$ für einen Kohlenwasserstoffrest mit 1 bis 18 C-Atomen steht.

2) Copolymere gemäß Anspruch 1, dadurch gekennzeichnet, daß

$R_1$ = Wasserstoff oder Methyl
$R_2$ = Wasserstoff, Alkyl ($C_1$-$C_6$) oder gegebenenfalls durch Chlor, Methoxy oder OH substituiertes Phenyl
$R_3$ = Alkyl ($C_{10}$-$C_{18}$)
$R_4$ = Alkyl ($C_{10}$-$C_{22}$) oder Dehydroabietyl
X = Sauerstoffatom oder $NR_5'$, wobei $R_5$ = Alkyl ($C_1$-$C_{18}$).

3) Copolymere gemäß Ansprüchen 1 bis 2, dadurch gekennzeichnet, daß

$R_1$ = H, $CH_3$
$R_2$ = H, $CH_3$, $-CH_2-C(CH_3)_3$ oder Phenyl
$R_3$ = n-Dodecyl oder Stearyl
$R_4$ = n-Dodecyl, Stearyl oder Dehydroabietyl
X = Sauerstoffatom

bedeuten.

4) Verfahren zur Herstellung von Copolymeren gemäß Anspruch 1, dadurch gekennzeichnet, daß man alternierende Copolymerisate aus Maleinsäureanhydrid und $\alpha$,ß-ungesättigten Verbindungen der Formel

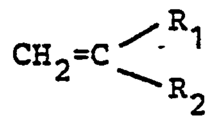

(V)

wobei

$R_1$ und $R_2$ die im Anspruch 1 angegebene Bedeutung besitzen,

mit Monoalkoholen oder sekundären Monoaminen der Formel

$$HX - R_3 \qquad (VI)$$

umsetzt, wobei X und $R_3$ die in Anspruch 1 angegebene Bedeutung besitzen und anschließend mit langkettigen primären Monoaminen der Formel

$$R_4 - NH_2 \qquad (VII)$$

wobei $R_4$ die in Anspruch 1 angegebene Bedeutung besitzt, zur Reaktion bringt.

5) Leimungsmittel für Papier, dadurch gekennzeichnet, daß es als Wirkstoff ein Copolymeres gemäß Anspruch 1 enthält.

6) Leimungsmittel für Papier, dadurch gekennzeichnet, daß es als Wirkstoff ein Copolymer gemäß Anspruch 2 enthält.

7) Leimungsmittel für Papier, dadurch gekennzeichnet, daß es als Wirkstoff ein Copolymer gemäß Anspruch 3 enthält.

8) Leimungsmittel für Papier, dadurch gekennzeichnet, daß es als Wirkstoff folgendes Copolymer enthält:

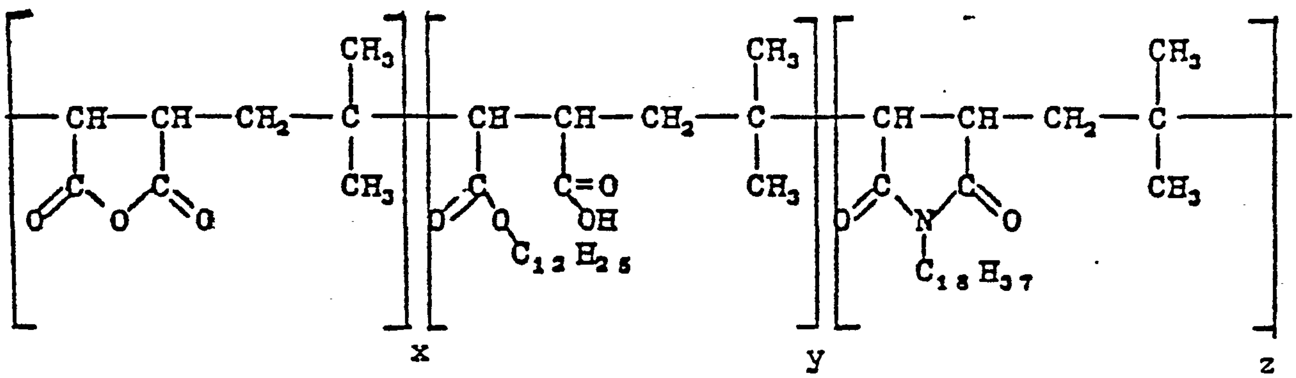

wobei
x = 10 bis 40 Molprozent
y = 40 bis 80 Molprozent
z = 10 bis 50 Molprozent,

wobei die Summe der Molprozente x + y + z = 100 beträgt.

9) Leimungsmittel für Papier, dadurch gekennzeichnet, daß es als Wirkstoff folgende Copolymere enthält:

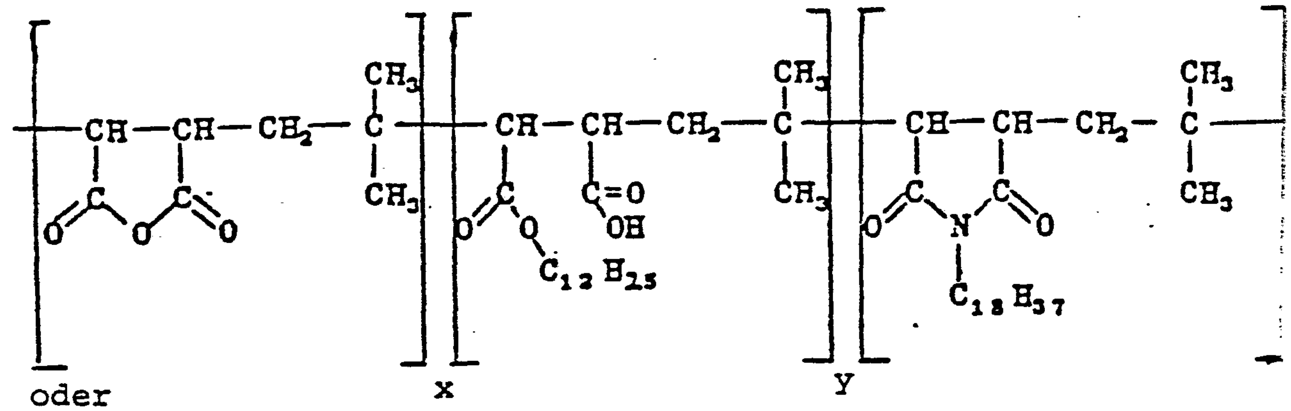

oder

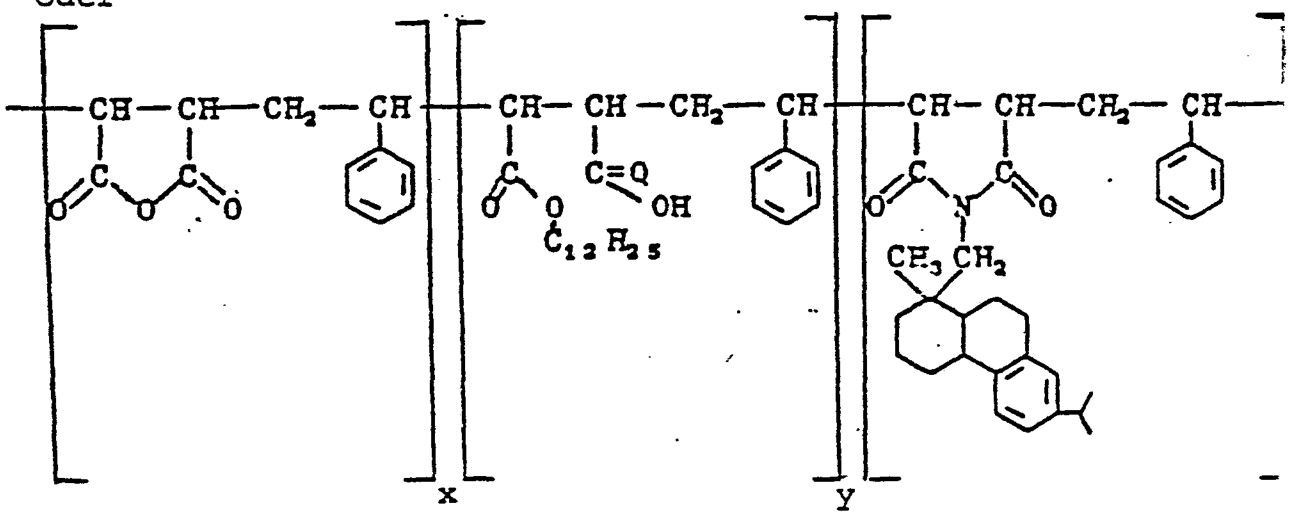

wobei

x = 10 bis 40 Molprozent

y = 40 bis 80 Molprozent

z = 10 bis 50 Molprozent,

wobei die Summe der Molprozente x + y + z = 100 beträgt.

10) Verfahren zur Leimung von Papier, dadurch gekennzeichnet, daß man als Wirksubstanz ein Copolymer gemäß Ansprüchen 1 bis 3 einsetzt.